# EUROPEAN PATENT SPECIFICATION

(11) **EP 4 328 084 B1**
(45) Date of publication and mention of the grant of the patent: **13.08.2025**
(21) Application number: 22848141.2
(22) Date of filing: 24.06.2022
(51) Int. Cl.: B60N 2/28

(54) **SUPPORTING LEG TELESCOPIC LOCKING STRUCTURE AND CHILD SAFETY SEAT**
TELESKOPISCHE VERRIEGELUNGSSTRUKTUR FÜR EIN STÜTZBEIN UND KINDERSICHERHEITSSITZ
STRUCTURE DE VERROUILLAGE TÉLESCOPIQUE POUR MONTANT DE SUPPORT ET SIÈGE AUTO POUR ENFANT

(30) Priority: 30.07.2021 CN 202121762804 U
(43) Date of publication of application: 28.02.2024
(73) Proprietor: Ningbo Baby First Baby Products Co., Ltd., Yuyao, Zhejiang 315412 (CN)
(72) Inventor: ZHOU, Xiaolin, Ningbo, Zhejiang 315412 (CN); YANG, Gang, Ningbo, Zhejiang 315412 (CN)
(74) Representative: Behr, Wolfgang
(86) International application number: PCT/CN2022/101082
(87) International publication number: WO 2023/005534

(56) References cited:
- CN-A- 107 791 904
- CN-A- 110 281 821
- CN-U- 206 217 690
- CN-U- 210 212 127
- CN-U- 211 731 131
- CN-U- 211 892 932
- CN-U- 211 892 932
- CN-U- 212 243 053
- CN-U- 213 292 068
- CN-U- 215 621 544
- DE-A1- 102013 107 424
- GB-A- 2 490 414

## Description

### TECHNICAL FIELD

The present disclosure relates to the technical field of child safety seats, and particularly to a telescopic support leg locking structure and a child safety seat including the same.

### BACKGROUND

With the improvement of people's awareness of driving safety, child safety seats have become a must-have for infants and children in vehicles. To prevent the child safety seat from moving due to inertia in a case such as sudden braking, a support leg is generally arranged at the front end of the base of the child safety seat. The support leg can be folded up when the child safety seat does not need to be used.

However, existing support legs may move forward and backward when a vehicle accident occurs, and the support leg cannot effectively support the child safety seat, resulting in low safety. CN 211 892 932 discloses a telescopic support leg which can move during use.

### SUMMARY

To solve at least one of the above problems, the present disclosure first provides a telescopic support leg locking structure, including a base, a support leg pedestal, and a support leg, where the support leg pedestal is slidably connected to the base, and the support leg is hingedly connected to the support leg pedestal; and the telescopic support leg locking structure further includes a secondary lock, where the support leg pedestal is provided with a chamber for the secondary lock to slide vertically, the secondary lock includes a locking tongue configured to abut against the support leg, the chamber is provided with a lower opening for the locking tongue to extend out therethrough, the base is provided with a locking hole, and when the support leg is separated from the locking tongue, the locking tongue is locked with the locking hole to restrict the support leg pedestal from moving forward and backward relative to the base.

Optionally, the base is provided with a first rail for the support leg pedestal to slide forward and backward, and a sliding column configured to engage with the first rail is arranged on the support leg pedestal.

Optionally, the sliding column is connected to a fastener configured to prevent the sliding column from disengaging from the first rail.

Optionally, a front end of the first rail is in communication with the locking hole.

Optionally, the locking tongue includes a locking portion and a sliding portion connected to a lower end of the locking portion, the locking portion is engaged with the locking hole when the locking tongue is locked with the locking hole, and the sliding portion is configured to be slidably connected to the first rail when the locking tongue is unlocked from the locking hole.

Optionally, the telescopic support leg locking structure further includes a connecting rod extending through the support leg pedestal, and the base is provided with a second rail configured to engage with the connecting rod.

Optionally, the support leg pedestal includes a lower cover and a fixing plate connected to each other, the chamber is arranged on the lower cover, and a restoring spring is arranged between the secondary lock and the fixing plate.

Optionally, a connecting portion is arranged at a top of the secondary lock, and a baffle plate configured to engage with the connecting portion is arranged at the lower opening.

Optionally, a plurality of slide grooves are provided in a circumferential direction of the connecting portion, and slide rails configured to slidably engage with the slide grooves are correspondingly arranged on an inner wall of the chamber.

Compared with the prior art, in the telescopic support leg locking structure of the present disclosure, the secondary lock configured to lock the support leg in an unfolded state with the base is arranged, and the locking tongue of the secondary lock can be unlocked from the locking hole of the base and locked with the locking hole of the base by folding and unfolding the support leg, respectively. Such a structure is simple and is convenient and reliable to operate, and ensures that the support leg in the unfolded state can remain in the state of being locked with the base. Therefore, the support leg can be prevented from retracting when a vehicle accident occurs, thereby ensuring that the support leg can effectively support a child safety seat and greatly improving the safety in use.

In addition, the present disclosure provides a child safety seat, including the telescopic support leg locking structure as described above.

Compared with the prior art, the child safety seat of the present disclosure has the same advantages as those of the telescopic support leg locking structure compared with the prior art, so the details will not be repeated herein.

### BRIEF DESCRIPTION OF THE DRAWINGS

FIG. 1 is a partial structural diagram of a base according to an embodiment of the present disclosure.
FIG. 2 is an exploded view of a support leg and a support leg pedestal according to an embodiment of the present disclosure.
FIG. 3 is an enlarged view of part A in FIG. 2.
FIG. 4 is a cross-sectional view of a telescopic support leg locking structure with a secondary lock being unlocked according to an embodiment of the present disclosure.
FIG. 5 is an enlarged view of part B in FIG. 4.
FIG. 6 is a cross-sectional view of a telescopic support leg locking structure with a secondary lock being just moved to a position of a locking hole according to an embodiment of the present disclosure.
FIG. 7 is a cross-sectional view of a telescopic support leg locking structure with a secondary lock being locked with a locking hole according to an embodiment of the present disclosure.
FIG. 8 is a cross-sectional view of a telescopic support leg locking structure with a secondary lock being locked with a locking hole and a support leg being fully unfolded according to an embodiment of the present disclosure.

List of reference numerals:
1. base; 11. locking hole; 12. first rail; 13. second rail; 2. support leg pedestal; 21. lower cover; 211. chamber; 2111. lower opening; 2112. baffle plate; 2113. slide rail; 22. sliding column; 23. fastener; 24. fixing plate; 25. upper cover; 3. support leg; 4. secondary lock; 41. locking tongue; 411. locking portion; 412. sliding portion; 42. connecting portion; 421. slide groove; 5. connecting rod; 6. restoring spring.

### DETAILED DESCRIPTION OF THE EMBODIMENTS

To make the objectives, technical features, and advantages of the present disclosure more comprehensible, specific embodiments of the present disclosure will be described in detail below with reference to the accompanying drawings.

In the description of the present disclosure, it should be understood that orientation or position relationships indicated by the terms such as "upper" and "lower" are orientation or position relationships based on the normal use of the product.

The terms "first" and "second" are used herein for descriptive purposes, and are not intended to indicate or imply relative importance or implicitly point out the number of the indicated technical features. Therefore, the feature defined by "first" or "second" may explicitly or implicitly include at least one such feature. In the drawings of the embodiments of the present disclosure, a coordinate system XYZ is provided, where the positive direction of the X axis represents left, the negative direction of the X axis represents right, the positive direction of the Y axis represents front, the negative direction of the Y axis represents rear, the positive direction of the Z axis represents up, and the negative direction of the Z axis represents down.

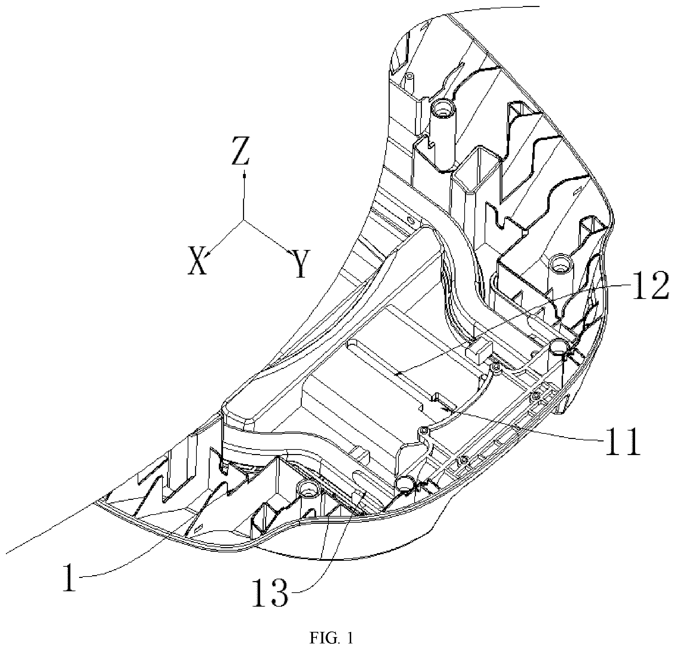

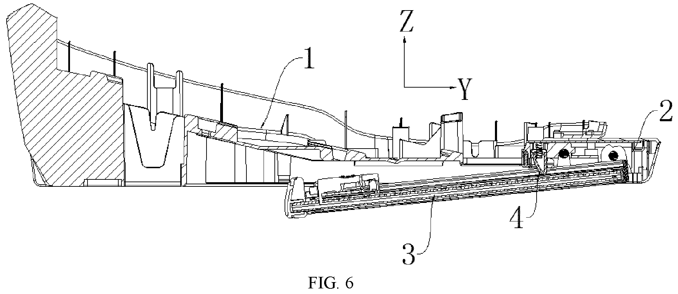

An embodiment of the present disclosure provides a telescopic support leg locking structure. Referring to FIG. 1, FIG. 2, FIG. 3, FIG. 4, FIG. 6, FIG. 7, and FIG. 8, the telescopic support leg locking structure includes a base 1, a support leg pedestal 2, and a support leg 3. The support leg pedestal 2 is slidably connected to the base 1. The support leg 3 is hingedly connected to the support leg pedestal 2. The telescopic support leg locking structure further includes a secondary lock 4. The support leg pedestal 2 is provided with a chamber 211 for the secondary lock 4 to slide vertically. The secondary lock 4 includes a locking tongue 41 configured to abut against the support leg 3. The chamber 211 is provided with a lower opening 2111 for the locking tongue 41 to extend out therethrough. The base 1 is provided with a locking hole 11. When the support leg 3 is separated from the locking tongue 41, the locking tongue 41 is locked with the locking hole 11 to restrict the support leg pedestal 2 from moving forward and backward relative to the base 1.

The support leg pedestal 2 can move forward and backward relative to the base 1. An upper end of the support leg 3 is hingedly connected to a front end of the support leg pedestal 2. When the support leg 3 abuts against the locking tongue 41, the locking tongue 41 is pushed upward, i.e., the secondary lock 4 is moved upward in the chamber 211. After the secondary lock 4 is moved upward by a distance, the locking tongue 41 is unlocked from the locking hole 11, and the secondary lock 4 can move in a front-rear direction along with the support leg pedestal 2. During vertical movement, the locking tongue 41 always remains in a state of protruding out of the lower opening 2111. When the support leg 3 is separated from the locking tongue 41, a length by which the locking tongue 41 protrudes from the lower opening 2111 reaches a maximum value, to ensure that the locking tongue 41 can be locked with the locking hole 11, thereby preventing the support leg pedestal 2 from moving forward and backward relative to the base 1. That the support leg 3 is separated from the locking tongue 41 means a state in which the support leg 3 is rotated to unfold relative to the support leg pedestal 2. When the locking tongue 41 is locked with the locking hole 11, a position of the lower opening 2111 corresponds to a position of the locking hole 11.

According to the telescopic support leg locking structure of this embodiment, the secondary lock 4 configured to lock the support leg 3 in an unfolded state with the base 1 is arranged, and the locking tongue 41 of the secondary lock 4 can be unlocked from the locking hole 11 of the base 1 and locked with the locking hole 11 of the base 1 by folding and unfolding the support leg 3, respectively. Such a structure is simple and is convenient and reliable to operate, and ensures that the support leg 3 in the unfolded state can remain in the state of being locked with the base 1. Therefore, the support leg 3 can be prevented from retracting when a vehicle accident occurs, thereby ensuring that the support leg 3 can effectively support a child safety seat and greatly improving the safety in use.

Optionally, as shown in FIG. 1, FIG. 2, FIG. 4, and FIG. 5, the base 1 is provided with a first rail 12 for the support leg pedestal 2 to slide forward and backward, and a sliding column 22 configured to engage with the first rail 12 is arranged on the support leg pedestal 2.

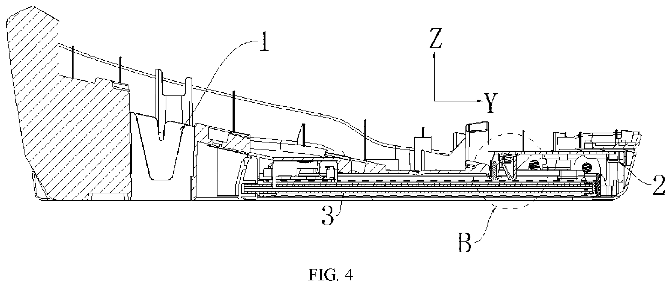

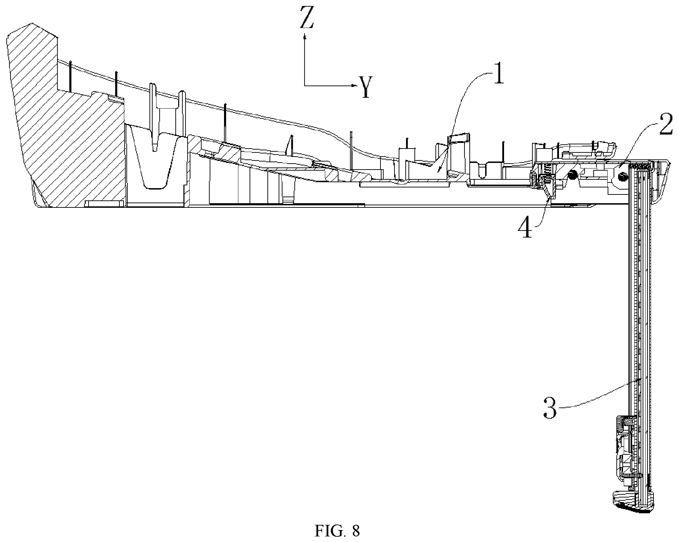

A length direction of the first rail 12 is consistent with the front-rear direction. The sliding column 22 is arranged at a rear end of the support leg pedestal 2. A support leg 3 is hingedly connected to a front end of the support leg pedestal 2. When the sliding column 22 moves to a rearmost end of the first rail 12, the support leg 3 is in a folded state (as shown in FIG. 4). When the sliding column 22 moves to a front-most end of the first rail 12, the support leg 3 is in the unfolded state (as shown in FIG. 8). When the support leg 3 abuts against the locking tongue 41, the locking tongue 41 is pushed upward, and the locking tongue 41 can be moved into or out of the locking hole 11 in the front-rear direction. A rear side of the locking hole 11 is in communication with one end of the first rail 12 of the base 1. When the support leg 3 is folded, the locking tongue 41 can be moved into the first rail 12.

In this embodiment, with the design of the sliding column 22 and the first rail 12 that are slidably connected to each other, the slidable connection between the support leg pedestal 2 and the base 1 in the front-rear direction is realized, and the support leg pedestal 2 will not tilt during the sliding process.

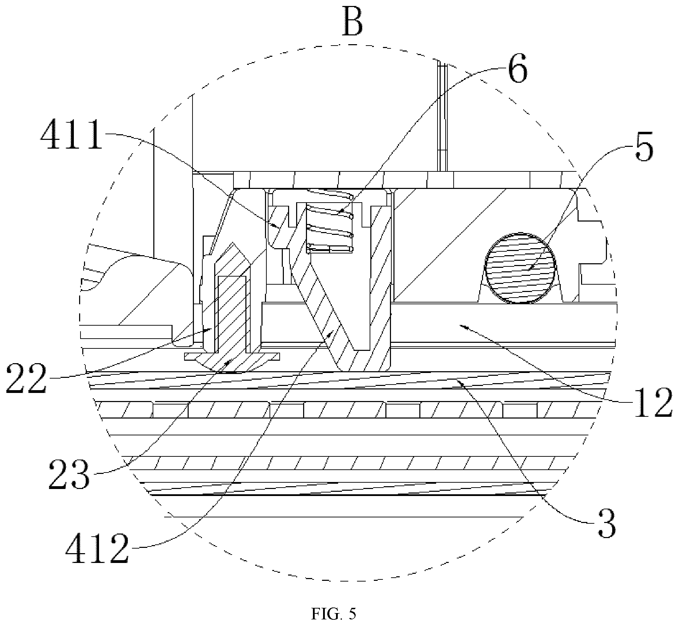

Optionally, as shown in FIG. 4 and FIG. 5, the sliding column 22 is connected to a fastener 23 configured to prevent the sliding column 22 from disengaging from the first rail 12.

The fastener 23 is configured to limit the vertical movement of the sliding column 22 relative to the first rail 12, i.e., prevent the support leg pedestal 2 from moving vertically relative to the base 1. The fastener 23 is preferably a screw having a threaded rod and a screw cap. A diameter of the screw cap is greater than a width of the first rail 12 in a left-right direction. The screw cap is located below the first rail 12. The threaded rod extends through the first rail 12 and is fixedly connected to the sliding column 22.

Optionally, as shown in FIG. 1, FIG. 4, FIG. 6, FIG. 7, and FIG. 8, a front end of the first rail 12 is in communication with the locking hole 11, so that after the locking tongue 41 is unlocked from the locking hole 11, the secondary lock 4 can move synchronously with the support leg pedestal 2. This ensures that the support leg 3 and the support leg pedestal 2 can be smoothly moved forward and backward relative to the base 1, thereby realizing the switching between the folded state and the unfolded state of the support leg 3.

Optionally, as shown in FIG. 1, FIG. 2, FIG. 3, FIG. 4, FIG. 6, FIG. 7, and FIG. 8, the locking tongue 41 includes a locking portion 411 and a sliding portion 412 connected to a lower end of the locking portion 411, the locking portion 411 is engaged with the locking hole 11 when the locking tongue 41 is locked with the locking hole 11, and the sliding portion 412 is configured to be slidably connected to the first rail 12 when the locking tongue 41 is unlocked from the locking hole 11.

A width of the locking portion 411 in the left-right direction is greater than a width of the sliding portion 412 in the left-right direction, so that the locking tongue 41 is locked with the locking hole 11 when the locking portion 411 is engaged with the locking hole 11, and the locking tongue 41 is unlocked from the locking hole 11 when the sliding portion 412 is engaged with the locking hole 11. The width of the locking portion 411 in the left-right direction is greater than a width of the first rail 12 in the left-right direction, so that when the locking tongue 41 is locked with the locking hole 11, the support leg 3 is prevented from retracting when impacted by an external force. The width of the slide portion 412 in the left-right direction is less than the width of the first rail 12 in the left-right direction, so that the support leg pedestal 2 can move forward and backward relative to the base 1 when the support leg 3 is retracted.

In this embodiment, the design of the locking tongue 41 as two structures, i.e., the locking portion 411 and the sliding portion 412, not only ensures that the locking tongue 41 is locked with the locking hole 11 when the support leg 3 is retracted, but also ensures that the locking tongue 41 can be unlocked smoothly from the locking hole 11 when the support leg 3 is folded, without affecting the forward and backward movement of the support leg pedestal 2 relative to the base 1.

Optionally, as shown in FIG. 1, FIG. 2, and FIG. 5, the telescopic support leg locking structure further includes a connecting rod 5 extending through the support leg pedestal 2, and the base 1 is provided with a second rail 13 configured to engage with the connecting rod 5.

The connecting rod 5 is of a smooth cylindrical structure, and during the forward and backward movement process, the support leg pedestal 2 can drive the connecting rod 5 to move synchronously in the second rail 13. In this way, the support leg pedestal 2 can stably move forward and backward relative to the base 1.

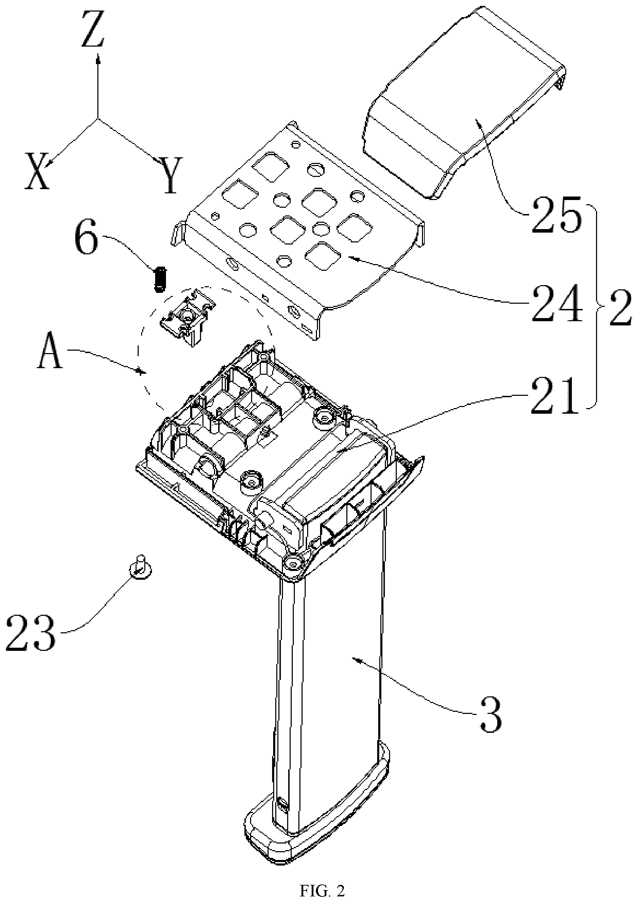

Optionally, as shown in FIG. 2, FIG. 3, and FIG. 5, the support leg pedestal 2 includes a lower cover 21 and a fixing plate 24 connected to each other, the chamber 211 is arranged on the lower cover 21, and a restoring spring 6 is arranged between the secondary lock 4 and the fixing plate 24.

The secondary lock 4 is provided with a mounting hole for arranging one end of the restoring spring 6. An upper end of the restoring spring 6 abuts against the fixing plate 24. When the support leg 3 is unfolded, the restoring spring 6 pushes the secondary lock 4 to move downward in a timely manner. The support leg pedestal 2 further includes an upper cover 25. The fixing plate 24 is arranged between the upper cover 25 and the lower cover 21. The upper cover 25 and the lower cover 21 are fixedly connected to each other by a fastener. The lower cover 21 is preferably made of plastic, and the fixing plate 24 is preferably made of metal, to minimize the overall weight of the child safety seat while ensuring the deformation resistance of the support leg pedestal 2.

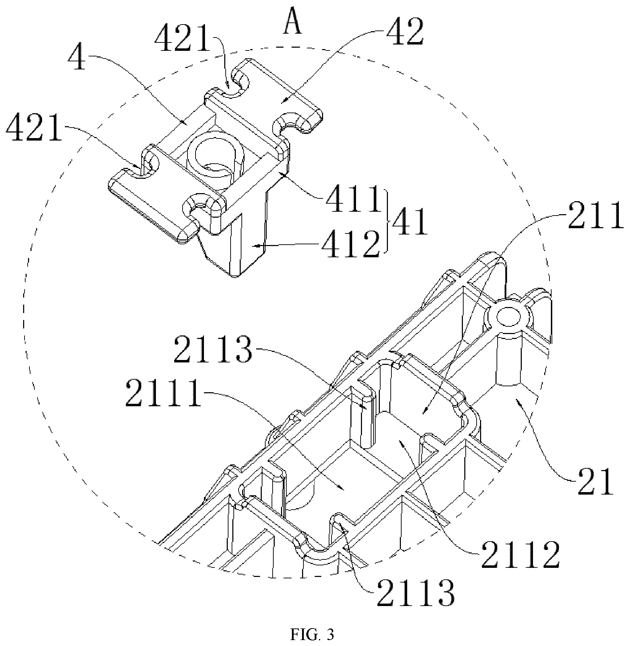

Optionally, as shown in FIG. 3, a connecting portion 42 is arranged at a top of the secondary lock 4, and a baffle plate 2112 configured to engage with the connecting portion 42 is arranged at the lower opening 2111.

The secondary lock 4 moves downward rapidly under an elastic force of the restoring spring 6, so that the connecting portion 42 strikes the baffle plate 2112 and makes a clicking sound, indicating that the secondary lock has been mounted in place. The arrangement of the baffle plate 2112 can also prevent the secondary lock 4 from being disengaged from the chamber 211.

Optionally, as shown in FIG. 3, a plurality of slide grooves 421 are provided in a circumferential direction of the connecting portion 42, and slide rails 2113 configured to slidably engage with the slide grooves 421 are correspondingly arranged on an inner wall of the chamber 211.

Four slide grooves 421 are provided, the four slide grooves 421 are symmetrically arranged, and correspondingly four slide rails 2113 are also provided. In this embodiment, the structure in which the slide grooves 421 and the slide rails 2113 are engaged with each other is designed between the connecting portion 42 and the chamber 211, so that the locking tongue 41 can move straight up and down, thereby ensuring the stability and reliability of the locking function of the secondary lock 4.

As shown in FIG. 8, when the support leg 3 is pulled to the outermost position, the restoring spring 6 is engaged into the locking hole 11 to lock the secondary lock 4, so that the support leg 3 cannot move forward and backward. When a vehicle accident occurs, the support leg 3 can be well controlled to support the child safety seat to protect the child in the child safety seat, i.e., the support leg 3 is restricted from telescoping forward and backward freely.

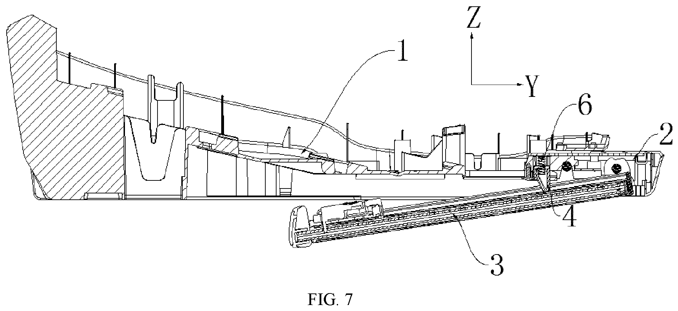

As shown in FIG. 7, FIG. 6, and FIG. 4, when the support leg 3 needs to be retracted, the support leg 3 is first folded backward to a certain angle, so that the support leg 3 abuts against the secondary lock 4. The support leg 3 is continuously folded backward. In this case, the secondary lock 4 is under the compression of the support leg 3, and the locking portion 411 of the secondary lock 4 has been disengaged from the locking hole 11, so that the support leg 3 can be moved backward and retracted.

Another embodiment of the present disclosure provides a child safety seat, including the telescopic support leg locking structure as described above.

According to the child safety seat of this embodiment, the secondary lock 4 configured to lock the support leg 3 in an unfolded state with the base 1 is arranged, and the locking tongue 41 of the secondary lock 4 can be unlocked from the locking hole 11 of the base 1 and locked with the locking hole 11 of the base 1 by folding and unfolding the support leg 3, respectively. Such a structure is simple and is convenient and reliable to operate, and ensures that the support leg 3 in the unfolded state can remain in the state of being locked with the base 1. Therefore, the support leg 3 can be prevented from retracting when a vehicle accident occurs, thereby ensuring that the support leg 3 can effectively support a child safety seat and greatly improving the safety in use.

Although the present disclosure has been disclosed above, the scope of protection of the present disclosure is not limited thereto. Those skilled in the art can make various changes and modifications without departing from the spirit and scope of the present disclosure. Such changes and modifications also fall within the scope of protection of the present disclosure.

## Claims

1. A telescopic support leg locking structure, comprising a base (1), a support leg pedestal (2), and a support leg (3), wherein the support leg pedestal (2) is slidably connected to the base (1), and the support leg (3) is hingedly connected to the support leg pedestal (2); and the telescopic support leg locking structure further comprises a secondary lock (4), wherein the support leg pedestal (2) is provided with a chamber (211) for the secondary lock (4) to slide vertically, the secondary lock (4) comprises a locking tongue (41) configured to abut against the support leg (3), the chamber (211) is provided with a lower opening (2111) for the locking tongue (41) to extend out therethrough, the base (1) is provided with a locking hole (11), and when the support leg (3) is separated from the locking tongue (41), the locking tongue (41) is locked with the locking hole (11) to restrict the support leg pedestal (2) from moving forward and backward relative to the base (1).

2. The telescopic support leg locking structure according to claim 1, wherein the base (1) is provided with a first rail (12) for the support leg pedestal (2) to slide forward and backward, and a sliding column (22) configured to engage with the first rail (12) is arranged on the support leg pedestal (2).

3. The telescopic support leg locking structure according to claim 2, wherein the sliding column (22) is connected to a fastener (23) configured to prevent the sliding column (22) from disengaging from the first rail (12).

4. The telescopic support leg locking structure according to claim 2, wherein a front end of the first rail (12) is in communication with the locking hole (11).

5. The telescopic support leg locking structure according to claim 4, wherein the locking tongue (41) comprises a locking portion (411) and a sliding portion (412) connected to a lower end of the locking portion (411), the locking portion (411) is engaged with the locking hole (11) when the locking tongue (41) is locked with the locking hole (11), and the sliding portion (412) is configured to be slidably connected to the first rail (12) when the locking tongue (41) is unlocked from the locking hole (11).

6. The telescopic support leg locking structure according to claim 1, further comprising a connecting rod (5) extending through the support leg pedestal (2), wherein the base (1) is provided with a second rail (13) configured to engage with the connecting rod (5).

7. The telescopic support leg locking structure according to claim 1, wherein the support leg pedestal (2) comprises a lower cover (21) and a fixing plate (24) connected to each other, the chamber (211) is arranged on the lower cover (21), and a restoring spring (6) is arranged between the secondary lock (4) and the fixing plate (24).

8. The telescopic support leg locking structure according to any one of claims 1-7, wherein a connecting portion (42) is arranged at a top of the secondary lock (4), and a baffle plate (2112) configured to engage with the connecting portion (42) is arranged at the lower opening (2111).

9. The telescopic support leg locking structure according to claim 8, wherein a plurality of slide grooves (421) are provided in a circumferential direction of the connecting portion (42), and slide rails (2113) configured to slidably engage with the slide grooves (421) are correspondingly arranged on an inner wall of the chamber (211).

10. A child safety seat, comprising the telescopic support leg locking structure according to any one of claims 1-9.

## Patentansprüche

1. Teleskopische Stützbein-Verriegelungsstruktur, umfassend eine Basis (1), einen Stützbein-Sockel (2) und ein Stützbein (3), wobei der Stützbein-Sockel (2) gleitend mit der Basis (1) verbunden ist und das Stützbein (3) gelenkig mit dem Stützbein-Sockel (2) verbunden ist; wobei die teleskopische Stützbein-Verriegelungsstruktur ferner eine Sekundärverriegelung (4) umfasst, wobei der Stützbein-Sockel (2) mit einer Kammer (211) für eine vertikale Gleitbewegung der Sekundärverriegelung (4) versehen ist, wobei die Sekundärverriegelung (4) eine Verriegelungszunge (41), die so konfiguriert ist, dass sie an dem Stützbein (3) anliegt, umfasst, wobei die Kammer (211) mit einer unteren Öffnung (2111), durch die sich die Verriegelungszunge (41) erstreckt, versehen ist und die Basis (1) mit einem Verriegelungsloch (11) versehen ist, und wobei, wenn das Stützbein (3) von der Verriegelungszunge (41) getrennt wird, die Verriegelungszunge (41) mit dem Verriegelungsloch (11) verriegelt wird, um eine Vorwärts- und Rückwärtsbewegung des Stützbein-Sockels (2) relativ zur Basis (1) zu begrenzen.

2. Teleskopische Stützbein-Verriegelungsstruktur nach Anspruch 1, wobei die Basis (1) mit einer ersten Schiene (12) für ein Vorwärts- und Rückwärtsgleiten des Stützbein-Sockels (2) versehen ist und auf dem Stützbein-Sockel (2) eine Gleitsäule (22) angeordnet ist, die so konfiguriert ist, dass sie mit der ersten Schiene (12) in Eingriff kommt.

3. Teleskopische Stützbein-Verriegelungsstruktur nach Anspruch 2, wobei die Gleitsäule (22) mit einem Befestigungselement (23) verbunden ist, das so konfiguriert ist, dass es verhindert, dass sich die Gleitsäule (22) von der ersten Schiene (12) löst.

4. Teleskopische Stützbein-Verriegelungsstruktur nach Anspruch 2, wobei ein vorderes Ende der ersten Schiene (12) in Verbindung mit dem Verriegelungsloch (11) steht.

5. Teleskopische Stützbein-Verriegelungsstruktur nach Anspruch 4, wobei die Verriegelungszunge (41) einen Verriegelungsabschnitt (411) und einen Gleitabschnitt (412), der mit einem unteren Ende des Verriegelungsabschnitts (411) verbunden ist, umfasst, wobei der Verriegelungsabschnitt (411) in das Verriegelungsloch (11) eingreift, wenn die Verriegelungszunge (41) mit dem Verriegelungsloch (11) verriegelt ist, und wobei der Gleitabschnitt (412) so konfiguriert ist, dass er gleitend mit der ersten Schiene (12) verbunden ist, wenn die Verriegelungszunge (41) aus dem Verriegelungsloch (11) entriegelt ist.

6. Teleskopische Stützbein-Verriegelungsstruktur nach Anspruch 1, ferner umfassend eine Verbindungsstange (5), die sich durch den Stützbein-Sockel (2) erstreckt, wobei die Basis (1) mit einer zweiten Schiene (13) versehen ist, die so konfiguriert ist, dass sie mit der Verbindungsstange (5) in Eingriff kommt.

7. Teleskopische Stützbein-Verriegelungsstruktur nach Anspruch 1, wobei der Stützbein-Sockel (2) eine untere Abdeckung (21) und eine Befestigungsplatte (24), die miteinander verbunden sind, umfasst, wobei die Kammer (211) an der unteren Abdeckung (21) angeordnet ist und zwischen der Sekundärverriegelung (4) und der Befestigungsplatte (24) eine Rückstellfeder (6) angeordnet ist.

8. Teleskopische Stützbein-Verriegelungsstruktur nach einem der Ansprüche 1 bis 7, wobei an einer Oberseite der Sekundärverriegelung (4) ein Verbindungsabschnitt (42) angeordnet ist, und an der unteren Öffnung (2111) eine Prallplatte (2112) angeordnet ist, die so konfiguriert ist, dass sie mit dem Verbindungsabschnitt (42) in Eingriff kommt.

9. Teleskopische Stützbein-Verriegelungsstruktur nach Anspruch 8, wobei in einer Umfangsrichtung des Verbindungsabschnitts (42) mehrere Gleitnuten (421) vorgesehen sind und an einer Innenwand der Kammer (211) Gleitschienen (2113) entsprechend angeordnet sind, die so konfiguriert sind, dass sie gleitend in die Gleitnuten (421) eingreifen.

10. Kindersicherheitssitz, umfassend eine teleskopische Stützbein-Verriegelungsstruktur nach einem der Ansprüche 1 bis 9.

## Revendications

1. Structure de verrouillage de jambe de support télescopique, comprenant une base (1), un siège de jambe de support (2) et une jambe de support (3), dans laquelle le siège de jambe de support (2) est relié de manière coulissante à la base (1), et la jambe de support (3) est reliée par articulation au siège de jambe de support (2) ; et la structure de verrouillage de jambe de force télescopique comprend en outre une serrure secondaire (4), dans laquelle le siège de jambe de support (2) est pourvu d'une chambre (211) pour permettre à la serrure secondaire (4) de coulisser verticalement, la serrure secondaire (4) comprend un verrou (41) configuré pour s'appuyer contre la jambe de support (3), la chambre (211) est pourvue d'une ouverture inférieure (2111) pour permettre au verrou (41) de s'étendre à un extérieur à travers celle-ci, la base (1) est pourvue d'un trou de verrouillage (11), et lorsque la jambe de support (3) est séparée du verrou (41), le verrou (41) est verrouillé avec le trou de verrouillage (11) pour empêcher le siège de jambe de support (2) de se déplacer vers l'avant ou vers l'arrière par rapport à la base (1).

2. Structure de verrouillage de jambe de support télescopique selon la revendication 1, dans laquelle la base (1) est pourvue d'un premier rail (12) pour permettre au siège de jambe de support (2) de coulisser vers l'avant ou vers l'arrière, et une colonne coulissante (22) configurée pour s'engager avec le premier rail (12) est disposée sur le siège de jambe de support (2).

3. Structure de verrouillage de jambe de support télescopique selon la revendication 2, dans laquelle la colonne coulissante (22) est reliée à un élément de fixation (23) configuré pour empêcher la colonne coulissante (22) de se détacher du premier rail (12).

4. Structure de verrouillage de jambe de support télescopique selon la revendication 2, dans laquelle une extrémité avant du premier rail (12) est en communication avec le trou de verrouillage (11).

5. Structure de verrouillage de jambe de support télescopique selon la revendication 4, dans laquelle le verrou (41) comprend une portion de verrouillage (411) et une portion coulissante (412) reliée à une extrémité inférieure de la portion de verrouillage (411), la portion de verrouillage (411) est engagée avec le trou de verrouillage (11) lorsque le verrou (41) est verrouillé avec le trou de verrouillage (11), et la portion coulissante (412) est configurée pour être reliée de manière coulissante au premier rail (12) lorsque le verrou (41) est déverrouillée du trou de verrouillage (11).

6. Structure de verrouillage de jambe de support télescopique selon la revendication 1, comprenant en outre une bielle (5) s'étendant à travers le siège de jambe de support (2), dans laquelle la base (1) est pourvue d'un second rail (13) configuré pour s'engager avec la bielle (5).

7. Structure de verrouillage de jambe de support télescopique selon la revendication 1, dans laquelle le siège de jambe de support (2) comprend un couvercle inférieur (21) et une plaque de fixation (24) se reliant l'un à l'autre, la chambre (211) est disposée sur le couvercle inférieur (21), et un ressort de rappel (6) est disposé entre la serrure secondaire (4) et la plaque de fixation (24).

8. Structure de verrouillage de jambe de support télescopique selon l'une quelconque des revendications 1 à 7, dans laquelle une portion de liaison (42) est disposée à un sommet de la serrure secondaire (4), et un déflecteur (2112) configuré pour s'engager avec la portion de liaison (42) est disposé à l'ouverture inférieure (2111).

9. Structure de verrouillage de jambe de support télescopique selon la revendication 8, dans laquelle une pluralité de rainures de coulissement (421) sont prévues dans une direction circonférentielle de la portion de liaison (42), et des rails de coulissement (2113) configurés pour s'engager de manière coulissante avec les rainures de coulissement (421) sont disposés en conséquence sur une paroi intérieure de la chambre (211).

10. Siège de sécurité pour enfant, comprenant la structure de verrouillage de jambe de support télescopique selon l'une quelconque des revendications 1 à 9.
